# EUROPEAN PATENT APPLICATION

(11) **EP 4 804 517 A1**
(43) Date of publication of application: **09.09.2026**
(21) Application number: 24885363.2
(22) Date of filing: 03.10.2024
(51) Int. Cl.: H04N 7/18, G01S 17/66, G01S 17/86, G01S 17/89, H04N 5/222, H04N 23/611, H04N 23/695

(54) **CONTROL DEVICE, PROGRAM, AND MONITORING SYSTEM**

(30) Priority: 30.10.2023 JP 2023185658
(71) Applicant: Koito Manufacturing Co., Ltd., Shinagawa-ku, Tokyo 141-0001 (JP)
(72) Inventor: TAKADA Tomoaki, Shizuoka-shi, Shizuoka 424-8764 (JP)
(74) Representative: Hoffmann Eitle
(86) International application number: PCT/JP2024/035509
(87) International publication number: WO 2025/094588

(57) **Abstract**

A control device (20) is a control device (20) to which point cloud data of a monitoring area AR output from a LiDAR device (10) is input and which controls an imaging device (30) that is movable in the monitoring area AR. The control device (20) includes an extraction unit (21) that extracts a mobile body M from the point cloud data, a position specifying unit (22) that specifies a position of the extracted mobile body (M), and an instruction unit (24) that outputs, to the imaging device (30), an instruction to move to a position at which the position of the mobile body M is able to be imaged.

## Description

### Technical Field

The present invention relates to a control device, a program, and a monitoring system.

### Background Art

A monitoring system that monitors a person in a monitoring area using a monitoring camera has been put into practical use. Patent Literature 1 below describes such a monitoring system. In this monitoring system, the inside of a monitoring area is measured by a light detection and ranging (LiDAR) device, and a person captured by a camera and a mobile body measured by the LiDAR device are associated with each other. Therefore, the LiDAR device can specify the motion of the person specified by the camera. In the monitoring system of Patent Literature 1, one or a plurality of cameras are used.
[Patent Literature 1] JP 2022-154335 A

### Summary of Invention

In the monitoring system of the aforementioned Patent Literature, when a fixed object is located between a camera and a person, the person cannot be imaged. Therefore, even when there is a fixed object other than a person as an imaging target, there is a need to image the imaging target. Furthermore, it is conceivable that the imaging target is a mobile body such as a car or an animal other than a person.

Therefore, an object of the present invention is to provide a control device, a program, and a monitoring system capable of realizing a monitoring system that can capture an image of a mobile body that is an imaging target even when an object other than the mobile body exists in a monitoring area.

A control device to which point cloud data of a monitoring area output from a LiDAR device is input and which controls an imaging device movable in the monitoring area, includes: an extraction unit that extracts a mobile body from the point cloud data; a position specifying unit that specifies the position of the extracted mobile body; and an instruction unit that outputs, to the imaging device, an instruction to move to a position where the position of the mobile body can be imaged.

A program of the present invention is a program executed by a control device that controls an imaging device that is movable in a monitoring area on the basis of point cloud data of the monitoring area output from a LiDAR device, and includes an extraction step of extracting a mobile body from the point cloud data, a position specifying step of specifying the position of the extracted mobile body, and an instruction step of outputting, to the imaging device, an instruction to move to a position where the position of the mobile body can be imaged.

A monitoring system of the present invention includes a LiDAR device; an imaging device that is movable in a monitoring area of the LiDAR device; and a control device that controls the imaging device on the basis of point cloud data of the monitoring area output from the LiDAR device, wherein the control device includes: an extraction unit that extracts a mobile body from the point cloud data; a position specifying unit that specifies the position of the extracted mobile body; and an instruction unit that outputs, to the imaging device, an instruction to move to a position where the position of the mobile body can be imaged.

In the present invention, the control device moves the imaging device to a position where the position of the mobile body can be imaged on the basis of the point cloud data from the LiDAR device. Therefore, even when a fixed object other than the mobile body that is the imaging target exists in the monitoring area, the imaging device can image the mobile body while avoiding the fixed object.

The control device and the monitoring system further include an orientation specifying unit that specifies a predetermined orientation of the extracted mobile body, and it is preferable that the instruction unit outputs, to the imaging device that is movable in the monitoring area and is capable of changing an imaging direction, an instruction to move to a position moved from the position of the mobile body to a side of the predetermined orientation, and outputs, to the imaging device, an instruction to direct the imaging direction to the position of the mobile body. Further, the program further includes an orientation specifying step of specifying a predetermined orientation of the extracted mobile body, and in the instruction step, it is preferable to output, to the imaging device that is movable in the monitoring area and is capable of changing an imaging direction, an instruction to move to a position moved from the position of the mobile body to a side of the predetermined orientation, and output, to the imaging device, an instruction to direct the imaging direction to the position of the mobile body.

According to such a configuration, the mobile body can be imaged from the side of the predetermined orientation of the mobile body. If the predetermined orientation in this case is, for example, the front of the mobile body, the mobile body can be imaged from the front side.

In the control device and the monitoring system, it is preferable that the orientation specifying unit specifies the predetermined orientation of the mobile body from the point cloud data. Further, in the program, in the orientation specifying step, it is preferable to specify the predetermined orientation of the mobile body from the point cloud data.

In this case, since the predetermined orientation of the mobile body can be specified substantially at the same time as extraction of the mobile body, extraction of the mobile body and specifying of the predetermined orientation can be performed in a short time.

In the control device and the monitoring system, it is preferable that the orientation specifying unit sets a moving direction of the mobile body to be the predetermined orientation. Further, in the program, in the orientation specifying unit, it is preferable to set a moving direction of the mobile body to be the predetermined orientation.

The moving direction of the mobile body is often the front of the mobile body. Therefore, according to such a configuration, the mobile body can be imaged from the front side.

Alternatively, in the control device and the monitoring system, it is preferable that data related to a video signal from the imaging device is input to the orientation specifying unit, and that the orientation specifying unit specifies the predetermined orientation of the mobile body from the data related to the video signal. Further, in the program, it is preferable that data related to a video signal from the imaging device is input to the control device, and in the orientation specifying step, it is preferable to specify the predetermined orientation of the mobile body from the data related to the video signal.

In general, the imaging device can perform imaging with a higher number of pixels than the LiDAR device, and can capture a mobile body in detail. Therefore, by specifying the predetermined orientation of the mobile body from the data related to the video signal, the predetermined orientation can be accurately specified.

In the control device and the monitoring system, it is preferable that the extraction unit extracts a predetermined part of the mobile body, that the position specifying unit specifies the position of the predetermined part, and that the instruction unit outputs, to the imaging device, an instruction to move to a position where the position of the predetermined part can be imaged. Further, in the program, in the extraction step, it is preferable to extract a predetermined part of the mobile body, in the position specifying step, it is preferable to specify the position of the predetermined part, and in the instruction step, it is preferable to output, to the imaging device, an instruction to move to a position where the position of the predetermined part can be imaged.

According to such a configuration, the predetermined part of the mobile body specified on the basis of the point cloud data can be imaged. As the predetermined part, for example, when the mobile body is a person, a hand of the person can be exemplified.

In the control device and the monitoring system, it is preferable that the extraction unit extracts the predetermined part from the point cloud data. Further, in the program, in the extraction step, it is preferable to extract the predetermined part from the point cloud data.

In this case, since extraction of the predetermined part can be performed substantially at the same time as extraction of the mobile body, extraction of the mobile body and extraction of the predetermined part can be performed in a short time.

In the control device and the monitoring system, it is preferable that the extraction unit sets a part with the largest motion of the mobile body as the predetermined part. Further, in the program, in the extraction step, it is preferable to set a part with the largest motion of the mobile body as the predetermined part.

In the monitoring device, a part with a large motion such as a hand of a person may be a part having a high monitoring value. Therefore, according to the above configuration, it is possible to image a part having a high monitoring value.

In the control device and the monitoring system, it is preferable that data related to a video signal from the imaging device is input to the extraction unit, and that the extraction unit extracts the predetermined part from the data related to the video signal. Further, in the program, it is preferable that data related to a video signal from the imaging device is input to the control device, and in the extraction step, it is preferable to extract the predetermined part from the data related to the video signal.

As described above, the imaging device can image the mobile body in more detail than the LiDAR device. Therefore, by extracting the predetermined part of the mobile body from the data related to the video signal, the predetermined part can be more accurately extracted.

In the control device and the monitoring system, it is preferable that the instruction unit outputs, to a plurality of the imaging devices, an instruction to move to positions at which the specified position of the mobile body is able to be imaged from different directions respectively. Further, in the program, in the instruction step, it is preferable to output, to a plurality of the imaging devices, an instruction to move to positions at which the specified position of the mobile body is able to be imaged from different directions respectively.

In this case, a multi-angle video can be obtained.

As described above, according to the present invention, a control device, a program, and a monitoring system, capable of realizing a monitoring system capable of imaging a mobile body that is an imaging target even when an object other than the mobile body exists in a monitoring area, are provided.

### Brief Description of Drawings

[FIG. 1] FIG. 1 is a conceptual diagram illustrating a monitoring system according to a first embodiment of the present invention.
[FIG. 2] FIG. 2 is a block diagram mainly illustrating a LiDAR device and a control device.
[FIG. 3] FIG. 3 is a block diagram illustrating an imaging device.
[FIG. 4] FIG. 4 is a flowchart illustrating a first operation of the control device in the first embodiment.
[FIG. 5] FIG. 5 is a flowchart illustrating a second operation of the control device in the first embodiment.
[FIG. 6] FIG. 6 is a flowchart illustrating a first operation of a control device in a second embodiment of the present invention.
[FIG. 7] FIG. 7 is a flowchart illustrating a second operation of the control device in the second embodiment of the present invention.
[FIG. 8] FIG. 8 is a conceptual diagram illustrating a monitoring system according to a third embodiment of the present invention.

### Description of Embodiments

Hereinafter, modes for implementing a control device, a program, and a monitoring system according to the present invention will be illustrated together with the accompanying drawings. The embodiments exemplified below are intended to facilitate understanding of the present invention and are not intended to limit the present invention. The present invention can be modified and improved within the scope of the claims without departing from the gist thereof. In addition, in the present invention, constituent elements in the following exemplary embodiments may be appropriately combined. In the drawings referred to below, dimensions of each member may be changed for easy understanding.

### (First Embodiment)

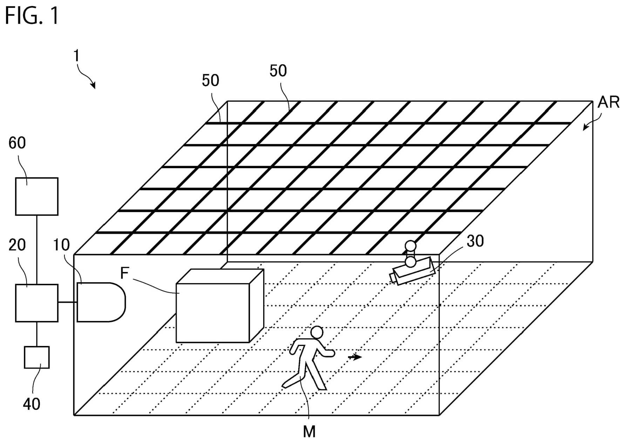

FIG. 1 is a conceptual diagram illustrating a monitoring system according to the present embodiment. As illustrated in FIG. 1, a monitoring system 1 of the present embodiment includes a LiDAR device 10, a control device 20, and an imaging device 30 as main components.

The LiDAR device 10 will be described.

As illustrated in FIG. 1, the LiDAR device 10 is installed at a slightly high position so as to be able to detect an object in a monitoring area AR, for example. For example, when the monitoring area AR is a road, it is installed on a pillar near the road, and when the monitoring area AR is indoors, it is installed on a pillar or the like. The LiDAR device 10 emits laser light to the monitoring area AR, and detects reflected light of the laser light to detect an object. Examples of objects detected by the LiDAR device 10 include a mobile body such as a person or a car, and a fixed object such as a building or a shelf. FIG. 1 illustrates an example in which a rectangular object such as a shelf is a fixed object F and a person is a mobile body M. The arrow indicates the moving direction of the mobile body M. By the detection, the LiDAR device 10 can detect, for example, the shape of the fixed object F or the mobile body M. Note that the fixed object F and the mobile body M illustrated in this example are examples, and for example, the fixed object F may have a shape other than a rectangular shape, and the mobile body M may be a mobile body other than a person.

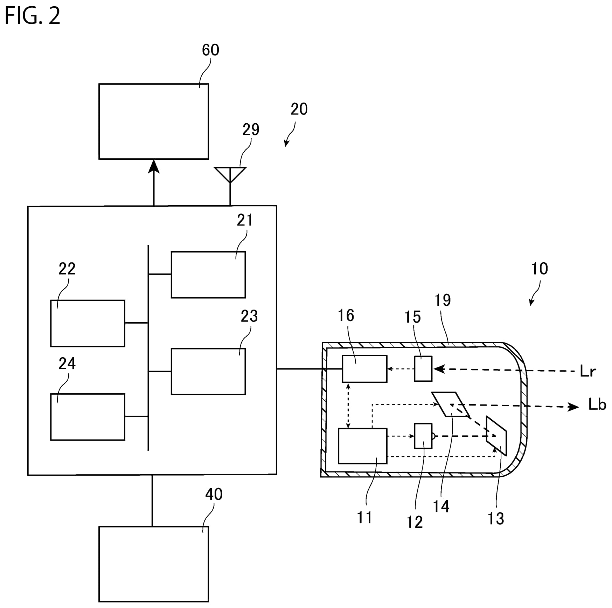

FIG. 2 is a block diagram mainly illustrating the LiDAR device 10 and the control device 20. As the LiDAR device 10 of the present embodiment, for example, a raster scan LiDAR device is used. The LiDAR device 10 of the present embodiment includes, as main components, a cover 19, a driver circuit 11 housed inside the cover 19, a laser light source 12, an H-direction scanning drive mirror 13, a V-direction scanning drive mirror 14, a light receiving element 15, and a point cloud data generator 16. Note that, in the example of FIG. 2, the LiDAR device 10 is a mechanical LiDAR device, but may be a phased array LiDAR device that does not include a drive unit (not illustrated) to be described later.

The cover 19 has a housing space in which the driver circuit 11, the laser light source 12, the H-direction scanning drive mirror 13, the V-direction scanning drive mirror 14, the light receiving element 15, and the point cloud data generator 16 are housed, and transmits laser light Lb emitted from the laser light source 12 and reflected light Lr of the laser light Lb reflected by an object in the monitoring area AR.

The driver circuit 11 includes, for example, a plurality of logic circuits, and is electrically connected to the laser light source 12, the H-direction scanning drive mirror 13, and the V-direction scanning drive mirror 14 to control them.

The laser light source 12 emits the laser light Lb having a predetermined wavelength. The laser light Lb is, for example, near-infrared light having a wavelength of 905 nm or 1550 nm. The timing at which the laser light source 12 emits the laser light Lb is controlled by the driver circuit 11, and the laser light Lb is emitted by a signal from the driver circuit 11. The driver circuit 11 is electrically connected to the point cloud data generator 16, and outputs data including the timing of the laser light Lb emitted from the laser light source 12 to the point cloud data generator 16.

The H-direction scanning drive mirror 13 includes a mirror that reflects the laser light Lb emitted from the laser light source 12 and a drive unit (not illustrated) controlled by the driver circuit 11. When reflecting the laser light Lb, the H-direction scanning drive mirror 13 reflects the laser light Lb while changing the reflection angle in the horizontal direction by the drive unit. By changing the reflection angle of the H-direction scanning drive mirror 13, the LiDAR device 10 performs horizontal scanning.

The V-direction scanning drive mirror 14 includes a mirror that reflects the laser light Lb reflected by the H-direction scanning drive mirror 13, and a drive unit (not illustrated) controlled by the driver circuit 11. When reflecting the laser light Lb, the V-direction scanning drive mirror 14 reflects the laser light Lb while changing the reflection angle in the vertical direction by the drive unit. By changing the reflection angle of the V-direction scanning drive mirror 14, the position of horizontal scanning performed by the LiDAR device 10 is changed in the vertical direction. The laser light reflected by the V-direction scanning drive mirror 14 passes through the cover 19, and is radiated toward the front of the LiDAR device 10.

The H-direction scanning drive mirror 13 and the V-direction scanning drive mirror 14 include, for example, a polygon mirror or a Galvano mirror. Further, each of the H-direction scanning drive mirror 13 and the V-direction scanning drive mirror 14 may be configured of a MEMS mirror. Further, the H-direction scanning drive mirror 13 and the V-direction scanning drive mirror 14 may be integrated into two by a biaxial scanning type mirror, and the order of reflecting the laser light Lb by the H-direction scanning drive mirror 13 and the V-direction scanning drive mirror 14 may be reversed.

The light receiving element 15 is an element that receives the reflected light Lr of the laser light Lb reflected by an object in the monitoring area AR. The reflected light Lr received by the light receiving element 15 includes information regarding an object located in the monitoring area AR. The light receiving element 15 outputs a signal that changes according to the intensity of the received light. The light receiving element 15 is electrically connected to the point cloud data generator 16, and the information is input to the point cloud data generator 16 as an electrical signal.

The point cloud data generator 16 generates point data for each reflection position based on the direction of the reflection position at which the laser light Lb is reflected, the distance to the reflection position, and the intensity of the light received by the light receiving element 15, on the basis of the data on the emission timing of the laser light input from the driver circuit 11, the information input from the light receiving element 15, and the data on the timing at which the information is input from the light receiving element 15. The point data includes information related to the coordinates of the point and the intensity of light reflected at the position of the point data. Therefore, the point cloud data generator 16 generates point cloud data that is a collection of point data. The point cloud data generator 16 is electrically connected to the control device 20, and the point cloud data is input to the control device 20.

Next, the control device 20 will be described.

The control device 20 includes, for example, a microcontroller, an integrated circuit such as an integrated circuit (IC), a large-scale integrated circuit (LSI), or an application specific integrated circuit (ASIC), and a numerical control (NC) device. Furthermore, the control device 20 may use a machine learning device or may not use a machine learning device. Note that, in the present embodiment, the control device 20 is electrically connected to the LiDAR device 10, a memory 40, and a monitor 60, and is configured to be able to input and output signals to and from the imaging device 30 wirelessly.

The memory 40 is configured to store information and be capable of reading the stored information. The memory 40 is, for example, a non-transitory recording medium, and is preferably a semiconductor recording medium such as a random access memory (RAM) or a read only memory (ROM), but may include a recording medium of any format such as an optical recording medium or a magnetic recording medium. Note that a "non-transitory" recording medium includes all computer-readable recording media except for a transitory propagating signal, and does not exclude a volatile recording medium. The memory 40 and the control device 20 may be provided in an integrated package. The memory 40 stores a program to be executed by the control device 20 and data necessary for generating information and the like. In addition, the memory 40 stores data related to the shape of the mobile body M and data related to the background as necessary. The control device 20 reads programs and information stored in the memory 40. In addition, the memory 40 stores information and the like in accordance with an instruction from the control device 20.

The control device 20 includes an extraction unit 21, a position specifying unit 22, an orientation specifying unit 23, an instruction unit 24, and an antenna 29, which are electrically connected via a bus line. The control device 20 reads the program stored in the memory 40, so that a part of the control device 20 serves and operates as each of the extraction unit 21, the position specifying unit 22, the orientation specifying unit 23, and the instruction unit 24. Note that the control device 20 may be configured such that the extraction unit 21, the position specifying unit 22, the orientation specifying unit 23, and the instruction unit 24 operate, without reading the program from the memory 25.

The extraction unit 21 is a part that extracts the mobile body M from the point cloud data input from the LiDAR device 10. For example, background data, that is, point cloud data when the mobile body M does not exist, is stored in the memory 40, and the extraction unit 21 compares the background data with the point cloud data input from the LiDAR device 10, and extracts the mobile body M from the difference. Alternatively, the extraction unit 21 compares pieces of the point cloud data of a plurality of frames input from the LiDAR device 10 with each other, and extracts a changed portion as the mobile body M. Note that the method of extracting the mobile body M by the extraction unit 21 is not limited to the above example.

In the present embodiment, the extraction unit 21 extracts a predetermined part of the mobile body M on the basis of the point cloud data, in addition to extraction of the mobile body M. By extracting the predetermined part in this manner, extraction of the predetermined part can be performed substantially at the same time as extraction of the mobile body M. Therefore, extraction of the mobile body M and extraction of the predetermined part can be performed in a short time. As the predetermined part, for example, when the mobile body is a person, a hand of the person can be exemplified. In this case, the extraction unit 21 extracts a predetermined part from the shape of the mobile body M extracted from the point cloud data. For example, as illustrated in FIG. 1, when the mobile body M is a person, the extraction unit 21 extracts, for example, a hand as a predetermined part from the entire shape of the mobile body M. In this case, for example, data indicating the shape of a person and the shape of a hand of the person is stored in the memory 40, and the extraction unit 21 reads the data in the memory 40, compares the data with the point cloud data, and extracts the hand as a predetermined part. Alternatively, the extraction unit 21 may extract a part having the largest motion of the mobile body M as a predetermined part. In this case, as the part having the largest motion, for example, a hand of a person when the mobile body M is a person can be exemplified. A hand of a person is extracted as a predetermined part, and the predetermined part is imaged as described later, so that the monitoring system 1 can be used for monitoring theft or the like. In the monitoring system 1, a part with a large motion such as a hand of a person may have a high monitoring value. By setting the part with the largest motion to be a predetermined part, a part with a high monitoring value can be imaged as described later. The extraction unit 21 may extract a predetermined part from the point cloud data by machine learning, for example. Note that the predetermined part extracted by the extraction unit 21 and the method of extracting the predetermined part by the extraction unit 21 are not limited to the above examples.

The position specifying unit 22 specifies the position of the mobile body M extracted by the extraction unit 21. That is, for example, when the monitoring area AR is indicated in a three-axis coordinate system, the position specifying unit 22 indicates the position of the mobile body M in the coordinate system. Note that the coordinates of the position of the mobile body M are, for example, coordinates of a position substantially at the center of the mobile body M or coordinates of the highest position of the mobile body M, but are not limited thereto.

Furthermore, in the present embodiment, the position specifying unit 22 specifies the position of a predetermined part of the mobile body M extracted by the extraction unit 21 in addition to specifying the position of the mobile body M. Also in this case, the position specifying unit 22 indicates, for example, the position of the predetermined part of the mobile body M by coordinates. Generally, since the position range of a predetermined part is small, the coordinates of the position of the predetermined portion are, for example, coordinates of a position substantially at the center of the predetermined part. However, for example, coordinates of a position other than the center of the predetermined part may be the coordinates of the position of the predetermined part.

The orientation specifying unit 23 specifies a predetermined orientation of the mobile body M extracted by the extraction unit 21. In the present embodiment, the orientation specifying unit 23 specifies a predetermined orientation of the mobile body M from the point cloud data. In this case, since the predetermined orientation of the mobile body M can be specified substantially at the same time as extraction of the mobile body M, extraction of the mobile body M and specifying of the predetermined orientation can be performed in a short time. For example, the orientation specifying unit 23 specifies a predetermined orientation of the mobile body M from the shape of the mobile body M extracted from the point cloud data. In this case, for example, data indicating the relationship between the shape of the mobile body M and the predetermined orientation is stored in the memory 40, and the orientation specifying unit 23 compares the data of the relationship stored in the memory 40 with the point cloud data to specify the predetermined orientation of the mobile body M. Further, the orientation specifying unit 23 may specify the moving direction of the mobile body M as the predetermined orientation of the mobile body M when it is determined from the point cloud data of a plurality of frames that the mobile body M is moving. Therefore, in FIG. 1, the moving direction indicated by the arrow of the mobile body M is the predetermined orientation. In this case, as described above, it is preferable when the extraction unit 21 compares pieces of the point cloud data of a plurality of frames and extracts the changed portion as the mobile body M. In general, the moving direction of the mobile body M is the front of the mobile body M. Therefore, when the moving direction is set to be the predetermined orientation, the mobile body M can be imaged from the front side of the mobile body M by imaging the mobile body M from the predetermined orientation side as described later. Note that the method of specifying the orientation of the mobile body M by the orientation specifying unit 23 is not limited to the above.

The instruction unit 24 outputs, to the imaging device 30, an instruction to move to a position where the position of the mobile body M specified by the position specifying unit 22 can be imaged. In the present embodiment, the instruction unit 24 outputs, to the imaging device 30, an instruction to move to a position moved from the position of the mobile body M to a side of the predetermined orientation specified by the orientation specifying unit 23, and outputs an instruction to direct the imaging direction to the position of the mobile body M. In this case, the imaging direction is an orientation opposite to the predetermined orientation. When the moving direction of the mobile body M is set to be the predetermined direction, in FIG. 1, the direction opposite to the direction of the arrow is set to be the imaging direction. For example, it is assumed that the coordinates of the mobile body M are (x, y) = (5, 6), and the predetermined orientation of the mobile body M is (x, y) = (1, 1) direction. In this case, the instruction unit 24 outputs, to the imaging device 30, an instruction to move to, for example, (x, y) = (5+1, 6+1) = (6, 7), and further outputs, to the imaging device 30, an instruction to direct the imaging direction of the imaging device 30 to the (x, y) = (-1, -1) direction. Note that the above is an example of the case where the position of the mobile body is indicated in a biaxial coordinate system. When the position of the mobile body is indicated in a triaxial coordinate system, the instruction unit 24 outputs an instruction in the triaxial coordinate system.

The antenna 29 is a part that transmits a control signal from the control device 20 to the imaging device 30. Examples of the control signal include a signal related to an instruction of movement from the instruction unit 24 and a control signal related to imaging such as imaging start/end. Note that a predetermined protocol for wireless communication is assigned to the control signal by a protocol assignment unit (not illustrated) or the like. Furthermore, in the present embodiment, the antenna 29 receives a video signal captured by imaging device 30, and acquires the video signal into the control device 20.

In the present embodiment, the monitor 60 is electrically connected to the control device 20. Therefore, a video signal input from the imaging device 30 via the antenna 29 is output to the monitor 60, and the video is displayed on the monitor 60.

Next, the imaging device 30 will be described.

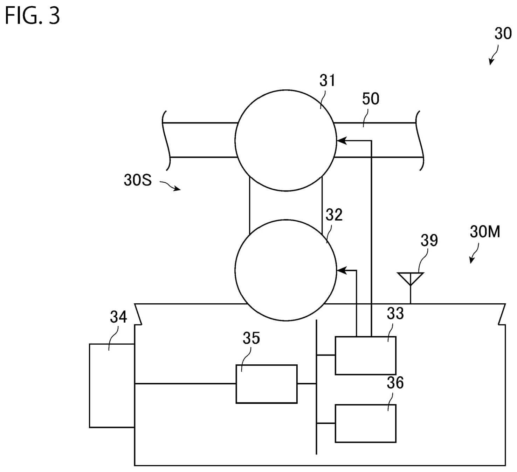

FIG. 3 is a block diagram illustrating the imaging device 30. As illustrated in FIGS. 1 and 3, the imaging device 30 is movably supported by a rail 50. The configuration of the rail 50 is not particularly limited as long as the imaging device 30 is movable. In the example of FIG. 1, the rails 50 are formed in a square lattice shape above the monitoring area AR. However, the rail 50 may be formed in a triangular lattice shape, a combination of a square lattice and a triangular lattice, or a Mondrian pattern shape.

As illustrated in FIG. 3, the imaging device 30 of the present embodiment includes a main body 30M and a support 30S. The support 30S includes a drive unit 31 and an imaging direction changing unit 32, and the main body 30M mainly includes a drive control unit 33, an imaging unit 34, an image processing unit 35, an imaging control unit 36, and an antenna 39. These parts are electrically connected via, for example, a bus line or the like.

The antenna 39 receives a control signal from the control device 20, and acquires the control signal into the imaging device 30. As described above, these control signals are signals such as instructions related to movement, imaging direction, and the like of the imaging device 30, start and stop of imaging, and the like. The acquired control signal is transmitted to the drive control unit 33, the imaging control unit 36, and the like. In the present embodiment, the antenna 39 transmits a video signal captured by the imaging device 30.

The drive unit 31 is configured such that the imaging device 30 is movable on the rail 50. Therefore, when the rail 50 is configured in the square lattice shape as described above, the drive unit 31 is configured to be movable in the x direction and the y direction. In this case, the drive unit 31 can switch the moving direction between the x direction and the y direction, for example, and has a wheel rolling on the rails 50. Note that the wheel is omitted in the drawing. In the case of having the wheel as described above, the drive unit 31 includes, for example, a stepping motor that rotates the wheel.

The imaging direction changing unit 32 is configured to be able to change the orientation of the main body 30M of the imaging device 30. That is, the imaging direction changing unit 32 can change the imaging direction of the imaging device 30. The imaging direction changing unit 32 includes, for example, a two-axis hinge or a ball joint that changes the rotation direction or the vertical direction of the main body 30M, and includes a stepping motor that performs driving for changing the direction. Note that the main body 30M may include a sensor that detects a roll angle, a pitch angle, a yaw angle, and the like with respect to x, y, and z coordinates of the main body 30M, that is, a sensor that detects the orientation of the main body 30M. The sensor is, for example, a gyro sensor. In the case where such a sensor is provided, a signal from the sensor is input to the drive control unit 33.

The drive control unit 33 receives a signal related to an instruction of movement or an instruction of an imaging direction from the instruction unit 24 of the control device 20 via the antenna 39, and controls the drive unit 31 and the imaging direction changing unit 32. For example, the drive control unit 33 grasps the position of the imaging device 30 on the rail 50, and controls the drive unit 31 so that the imaging device 30 can move to the position of the coordinates designated by the instruction of movement from the instruction unit 24. As described above, in the case where the drive unit 31 includes the stepping motor for moving on the rail 50, the drive control unit 33 controls the number of rotations of the stepping motor so that the imaging device 30 can move to the position of the coordinates designated by the instruction of movement. Note that, for example, in the case where the rail 50 includes a coordinate assignment unit capable of specifying a position, the imaging device 30 may acquire the position specified by the coordinate assignment unit, and the drive control unit 33 may compare an instruction of movement from the control device 20 with the position specified by the coordinate assignment unit, and control the drive unit 31 on the basis of the result of comparison.

Furthermore, in the case where the imaging direction changing unit 32 includes a stepping motor that changes the imaging direction of the imaging device 30, the drive control unit 33 rotates the stepping motor by a predetermined number of rotations by a signal related to the imaging direction from the instruction unit 24 to change the orientation of the imaging device 30. Furthermore, as described above, in the case where the main body 30M includes a sensor that detects a roll angle, a pitch angle, a yaw angle, and the like, the drive control unit 33 compares the imaging direction of the imaging device 30 designated by the instruction of movement from the instruction unit 24 with the orientation of the main body 30M specified by the output from the sensor, and controls the drive unit 31 so as to realize the imaging direction of the imaging device 30 based on the instruction of movement from the instruction unit 24.

The imaging unit 34 includes, for example, a matrix-type light receiving element such as a complementary metal-oxide-semiconductor (CMOS), a lens, and the like. In the present embodiment, the imaging direction of the imaging unit 34 is the orientation of the main body 30M. Furthermore, the imaging unit 34 may have a zoom function or the like. The imaging unit 34 is electrically connected to the image processing unit 35, and outputs a signal related to the captured video to the image processing unit 35.

The image processing unit 35 processes the video signal from the imaging unit 34. For example, the image processing unit 35 processes the video signal according to a predetermined standard such as the moving picture expert group (MPEG). The processed video signal is sent to the control device 20 via the antenna 39.

The imaging control unit 36 controls the imaging unit 34 and the image processing unit 35. The imaging control unit 36 controls start and stop of imaging by the imaging unit 34, zooming by the imaging unit 34, and the like. Furthermore, the imaging control unit 36 controls the image processing unit 35 to perform control such as start of processing of a video signal input from the imaging unit 34.

The video signal processed by the image processing unit 35 is output from the antenna 39 as described above, and the control device 20 receives the video signal output from the imaging device 30 and outputs the video signal to the monitor 60 as described above.

Next, an operation of the monitoring system 1 in the present embodiment will be described. The operation of the monitoring system 1 is performed by the control device 20 executing a program stored in the memory 40.

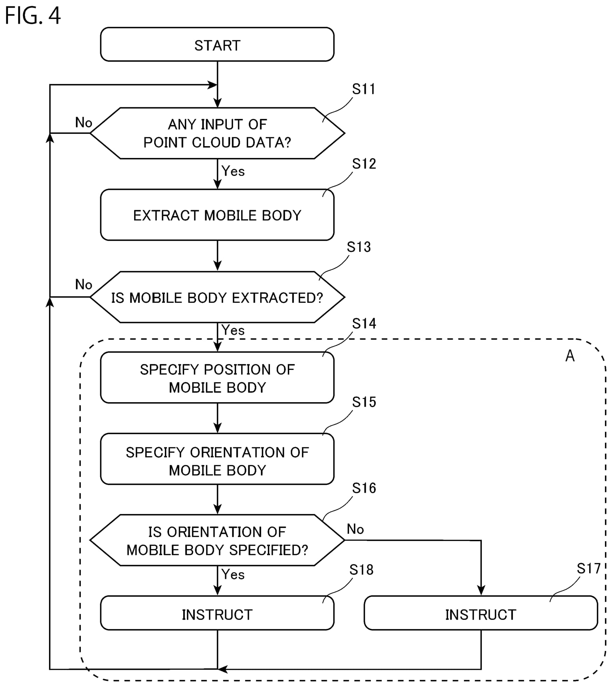

First, a first operation of the monitoring system 1 will be described. FIG. 4 is a flowchart illustrating the first operation of the control device 20. The first operation is an operation in a case where the extraction unit 21 extracts the mobile body M from the point cloud data and does not extract a predetermined part of the mobile body M. As illustrated in FIG. 4, the operation of the control device 20 of the present embodiment includes steps S11 to S18.

### <Step S11>

This step is a step of changing the next step depending on whether or not point cloud data is input from the LiDAR device 10. The control device 20 proceeds to step S12 when the point cloud data of the predetermined number of frames is input, and repeats this step when the point cloud data of the predetermined number of frames is not input. Note that the predetermined number of frames is, for example, one, but may be plural as described later.

### <Step S12>

This step is an extraction step of extracting the mobile body M from the point cloud data. When the extraction unit 21 compares the background data with the point cloud data input from the LiDAR device 10 and extracts the mobile body M from the difference, the extraction unit 21 may extract the mobile body M from the point cloud data of one frame in this step. Therefore, the predetermined number of frames in step S11 in this case is one. Furthermore, when the extraction unit 21 compares pieces of the point cloud data of a plurality of frames and extracts a changed portion as the mobile body M, the extraction unit 21 extracts the mobile body M from the point cloud data of the plurality of frames. Therefore, the predetermined number of frames in step S11 in this case is the said plurality of frames.

### <Step S13>

This step is a step of changing the next step depending on whether or not the mobile body M has been extracted from the point cloud data. The control device 20 proceeds to step S14 when the mobile body M has been extracted from the point cloud data, and returns to step S11 when the mobile body M cannot be extracted. Examples of the case where the mobile body M cannot be extracted include a case where the mobile body M does not exist in the monitoring area AR.

### <Step S14>

This step is a position specifying step of specifying the position of the mobile body M extracted in step S12. In this step, the position specifying unit 22 specifies the position of the mobile body M extracted by the extraction unit 21, and indicates, for example, the position of the mobile body M in a predetermined coordinate system. The specified position is output to the instruction unit 24.

### <Step S15>

This step is an orientation specifying step of specifying a predetermined orientation of the mobile body M extracted by the extraction unit 21 in step S12. In this step, as described above, for example, the orientation specifying unit 23 specifies a predetermined orientation of the mobile body M from the extracted shape of the mobile body M or specifies the moving direction of the mobile body M as a predetermined orientation of the mobile body M. In the case where the predetermined orientation of the mobile body M is specified from the shape of the mobile body M, the mobile body M may be extracted from the point cloud data of one frame. In addition, in the case where the moving direction of the mobile body M is specified as a predetermined orientation of the mobile body M, the predetermined orientation of the mobile body M is specified from the point cloud data of a plurality of frames. Therefore, in this case, the specific number of frames in step S11 may be plural. The predetermined orientation, having been specified, of the mobile body M is output to the instruction unit 24.

### <Step S16>

This step is a step of changing the next step depending on whether or not a predetermined orientation of the mobile body M has been specified in step S15. In this step, the control device 20 proceeds to step S17 when the predetermined orientation of the mobile body M has not been specified in step S15, and proceeds to step S18 when the predetermined orientation of the mobile body M has been specified in step S15.

### <Step S17>

This step is an instruction step of outputting, to the imaging device 30, an instruction to move to a position where the specified position of mobile body M can be imaged, and outputting, to the imaging device 30, an instruction to direct the imaging direction to the position of the mobile body M. In this step, it is assumed that a predetermined orientation of the mobile body M has not been specified in step S15. Therefore, in this step, the instruction unit 24 specifies a position where the position of the mobile body M specified in step S14 can be imaged. The position where the mobile body M can be imaged is, for example, a position away from the mobile body M by a predetermined distance in a predetermined specific direction from the position of the mobile body M. Further, the instruction unit 24 specifies a direction from the specific direction side toward the mobile body M, that is, a direction opposite to the specific direction. The specified information is output as part of the instruction. The instruction unit 24 outputs an instruction to move to the specified position where imaging can be performed with respect to the mobile body M and an instruction to direct the imaging direction to a direction from the specific direction side toward the mobile body M. For example, in the case where the position of the mobile body M is (x, y) = (5, 6), the predetermined specific direction is (x, y) = (1, 2), and the predetermined specific distance is a distance of (x, y) = (1, 2), that is, √5, the instruction unit 24 outputs an instruction to move to (x, y) = (5+1, 6+2) = (6, 8) to the imaging device 30. Furthermore, the instruction unit 24 outputs an instruction to the imaging device 30 so that the main body 30M faces (x, y) = (-1, -2) that is a direction opposite to the specific direction. That is, an instruction to set the imaging direction to (x, y) = (-1, -2) is output. Data related to the output instruction is transmitted to the imaging device 30 via the antenna 29. Note that the specific direction may not be a fixed direction. For example, a direction opposite to the direction from the LiDAR device 10 toward the mobile body M may be set as a specific direction. Note that the specific distance may not be a fixed distance, and may vary within a certain range, for example.

Data related to the instruction, the position, and the direction transmitted from the antenna 29 is input to the drive control unit 33 via the antenna 39 of the imaging device 30. The drive control unit 33 controls the drive unit 31 on the basis of the data. Therefore, the imaging device 30 moves to a position away from the mobile body M by a specific distance in a specific direction from the position of the mobile body M. Furthermore, the drive control unit 33 controls the imaging direction changing unit 32 on the basis of the data. Therefore, the main body 30M is directed in the direction opposite to the specific direction by the imaging direction changing unit 32. Therefore, the imaging direction of the imaging device 30 is set to a direction facing the mobile body M.

### <Step S18>

This step is an instruction step of outputting, to the imaging device 30, an instruction to move to a position moved from the position of the mobile body M to a side of the predetermined orientation, and outputting an instruction to direct the imaging direction to the position of the mobile body M, as in step S17. However, in this step, it is assumed that a predetermined orientation of the mobile body M is specified in step S15. Therefore, this step is different from step 17 in that the specific direction, described in step 17, is a predetermined orientation of the mobile body M. That is, in this step, the main body 30M of the imaging device 30 is controlled to be directed from the predetermined orientation side of the mobile body M toward the mobile body M. In this step, as in step S17, the instruction unit 24 specifies a position where the position of the mobile body M specified in step S14 can be imaged. At this time, in this step, the position where the mobile body M can be imaged is, for example, a position away from the mobile body M by a specific distance in a direction of the predetermined orientation of the mobile body M from the position of the mobile body M. Therefore, the instruction unit 24 specifies a direction from the predetermined orientation side of the mobile body M toward the mobile body M, that is, a direction opposite to the predetermined orientation of the mobile body M. The specified information is output as part of the instruction. Note that the specific distance may not be a fixed distance, and may vary within a certain range, for example. The instruction unit 24 outputs, to the mobile body M, an instruction to move to the specified position where the mobile body M can be imaged and an instruction to direct the imaging direction to a direction from the predetermined orientation side toward the mobile body M. For example, in the case where the position of the mobile body M is (x, y) = (5, 6), the predetermined orientation of the mobile body M is (x, y) = (2, 1), and the specific distance is a distance of (x, y) = (2, 1), that is, √5, the instruction unit 24 outputs an instruction to the imaging device 30 to move to (x, y) = (5+2, 6+1) = (7, 7). Furthermore, the instruction unit 24 outputs an instruction to the imaging device 30 so that the main body 30M faces (x, y) = (-2, -1) that is a direction opposite to the predetermined orientation of the mobile body M. Data related to the output instruction is transmitted to the imaging device 30 via the antenna 29.

As in step S17, the data related to the specified position and direction transmitted from the antenna 29 is input to the drive control unit 33 via the antenna 39 of the imaging device 30, and the imaging direction of the imaging device 30 is set to a direction facing the mobile body M.

After steps S17 and S18, the imaging device 30 performs imaging according to an instruction from the control device 20 or an instruction from the imaging control unit 36. Thus, according to the present operation, the imaging device 30 can image the mobile body M from a direction of a predetermined orientation of the mobile body M or a specific direction. When the predetermined orientation is the moving direction of the mobile body M, the imaging device 30 images the mobile body M from the moving direction side. The video signal captured by the imaging unit 34 is subjected to signal processing by the image processing unit 35 and output from the antenna 39. Then, the control device 20 receives the video signal from the antenna 29, and outputs the video signal to the monitor 60. Upon receiving the video signal, the monitor 60 displays the video.

Next, a second operation of the monitoring system 1 will be described.

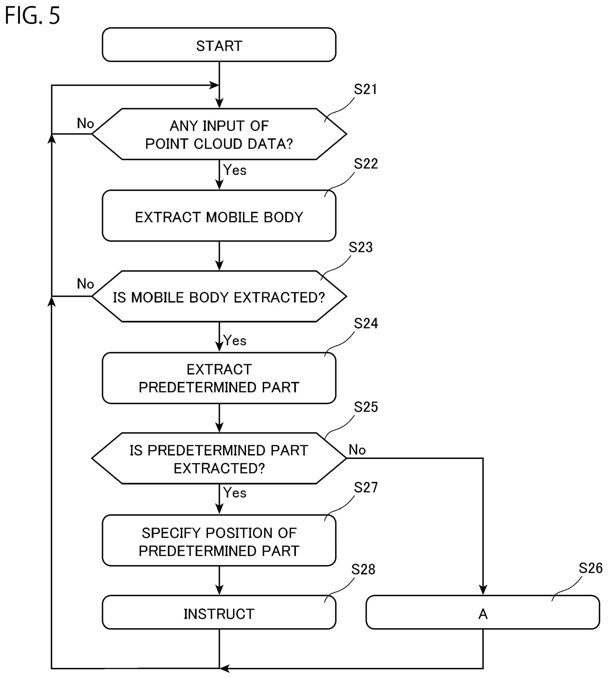

FIG. 5 is a flowchart illustrating the second operation of the control device 20. The second operation is an operation in a case where the extraction unit 21 extracts the mobile body M from the point cloud data and further extracts a predetermined part of the mobile body M. As illustrated in FIG. 5, in the present embodiment, the operation of the control device 20 includes steps S21 to S28.

### <Steps S21 to S23>

Steps S21 to S23 are similar to steps S11 to S13 in the first operation.

### <Step S24>

This step is an extraction step of extracting a predetermined part of the mobile body M from the point cloud data by the extraction unit 21. Steps S21 and S24 may constitute the extraction step. In this step, similarly to the description of the control device 20, the extraction unit 21 extracts a predetermined part from, for example, the shape of the mobile body M extracted from the point cloud data. Alternatively, the extraction unit 21 extracts a part having the largest motion of the mobile body M as a predetermined part. Data related to the extracted predetermined part is input to the position specifying unit 22.

### <Step S25>

This step is a step of changing the next step depending on whether or not the predetermined part of the mobile body M has been extracted from the point cloud data. The control device 20 proceeds to step S26 when the predetermined part cannot be extracted from the point cloud data, and proceeds to step S27 when the predetermined part has been extracted. Examples of the case where the extraction cannot be performed include a case where a predetermined part to be extracted is hidden.

### <Step S26>

This step is a step including steps similar to a plurality of steps in A, surrounded by a broken line, of the first operation. That is, when the predetermined part of the mobile body M cannot be extracted, the control device 20 proceeds to a step similar to step S14, specifies the position of the mobile body M, and outputs an instruction to move to a position where the specified position of the mobile body M can be imaged, and an instruction to direct the imaging direction to the position of the mobile body M.

### <Step S27>

This step is a step in which the position specifying unit 22 specifies the position of the predetermined part of the mobile body M. In this step, as in the description of the control device 20, for example, the position of the predetermined part of the mobile body M is indicated in, for example, a coordinate system. The data related to the specified position of the predetermined part of the mobile body M is output to the instruction unit 24.

### <Step S28>

This step is an instruction step of outputting, to the imaging device 30, an instruction to move to a position where the specified position of the predetermined part of the mobile body M can be imaged. In this step, the instruction unit 24 specifies a position where the position of the predetermined part of the mobile body M, specified in step S27, can be imaged. In this example, the predetermined part is extracted from the point cloud data from the LiDAR device 10. Therefore, the predetermined part can be imaged from the LiDAR device 10 side. Therefore, for example, the instruction unit 24 specifies a position moved from the position of the predetermined part to the LiDAR device 10 side by a predetermined distance as a position where the predetermined part can be imaged. In addition, the instruction unit 24 specifies as the direction from the position where the predetermined part can be imaged toward the predetermined part. The information related to the position where the predetermined part can be imaged and the direction toward the predetermined part, which are specified, are output as part of the instruction. The instruction unit 24 outputs, to the mobile body M, an instruction to move to the specified position where the mobile body M can be imaged and an instruction to direct the imaging direction to a direction from the predetermined orientation side toward the mobile body M. For example, in the case where the position of the mobile body M is (x, y) = (5, 6), the direction from the LiDAR device 10 toward the predetermined part of the mobile body M is (x, y) = (1, 1), and the predetermined distance is a distance of (x, y) = (2, 2), that is, √8, the instruction unit 24 outputs an instruction to the imaging device 30 to move to (x, y) = (5-2, 6-2) = (3, 4). Furthermore, the instruction unit 24 outputs an instruction to the imaging device 30 so that the main body 30M faces (x, y) = (1, 1) that is a direction from the LiDAR device 10 toward the predetermined part of the mobile body M. Data related to the output instruction is transmitted to the imaging device 30 via the antenna 29.

As in steps S17 and S18, the data related to the specified position and direction transmitted from the antenna 29 is input to the drive control unit 33 via the antenna 39 of the imaging device 30, and the imaging direction of the imaging device 30 is set to a direction facing the predetermined part of the mobile body M.

After steps S26 and S28, the imaging device 30 performs imaging according to the instruction from the control device 20 or the instruction from the imaging control unit 36, in the same manner as the first operation. Thus, according to the present operation, the imaging device 30 can image the predetermined part of the mobile body M. The video signal captured by the imaging unit 34 is subjected to signal processing by the image processing unit 35 and output from the antenna 39. Then, the control device 20 receives the video signal from the antenna 29, and outputs the video signal to the monitor 60. Upon receiving the video signal, the monitor 60 displays the video.

### (Second Embodiment)

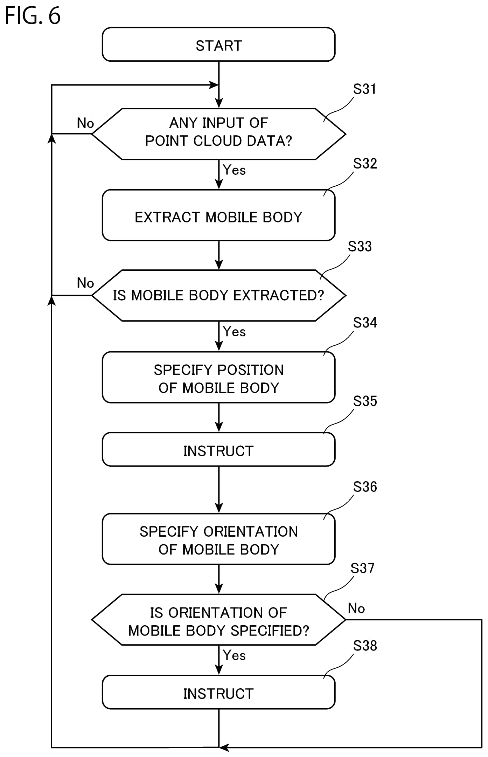

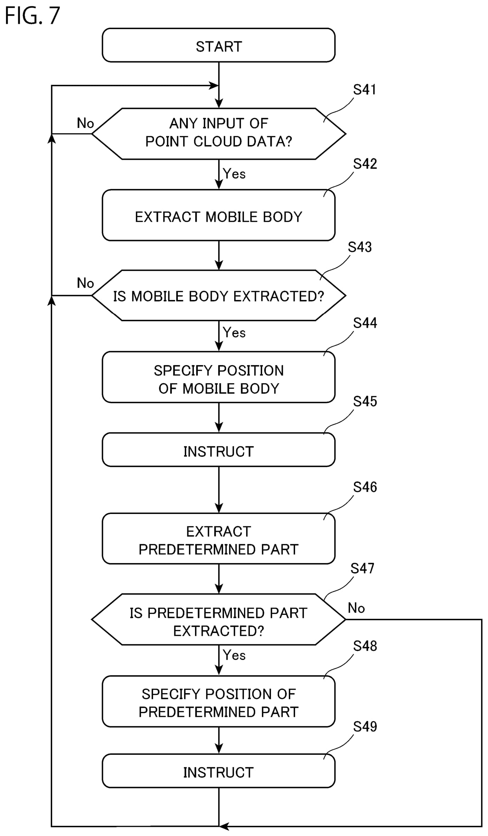

Next, a second embodiment of the present invention will be described in detail with reference to FIGS. 6 and 7. Note that the same or equivalent components as those of the first embodiment are denoted by the same reference numerals and redundant description is omitted unless otherwise specified.

The control device 20 of the present embodiment has a configuration similar to that of the control device 20 of the first embodiment, but is different from the control device 20 of the first embodiment in that data related to an imaging signal captured by the imaging device 30 is further input to the extraction unit 21 and the orientation specifying unit 23.

The extraction unit 21 extracts the mobile body M from the point cloud data input from the LiDAR device 10, in the same manner as the first embodiment. Furthermore, in the present embodiment, the extraction unit 21 extracts a predetermined part of the mobile body M on the basis of data related to the imaging signal, in addition to extraction of the mobile body M. In general, the imaging device 30 can image the mobile body M in more detail than the LiDAR device 10. Therefore, by extracting a predetermined part of the mobile body M from the data related to the video signal, the predetermined part can be more accurately extracted. When the extraction unit 21 extracts a predetermined part, imaging of the mobile body M is first performed by the imaging device 30 as described later. The extraction unit 21 extracts a predetermined part from the shape of the mobile body M of the data related to the imaging signal input from the imaging device 30. Also in the present embodiment, for example, in the case where the mobile body M is a person as illustrated in FIG. 1, the extraction unit 21 extracts, for example, a hand as a predetermined part from the entire shape of the mobile body M in the data related to the imaging signal. In this case, for example, as similar to the first embodiment, data indicating the shape of a person and the shape of a hand of the person is stored in the memory 40, and the extraction unit 21 reads the data in the memory 40, compares the data with the point cloud data, and extracts the hand as a predetermined part. Alternatively, the extraction unit 21 may extract a part having the largest motion of the mobile body M in the data related to the imaging signal, as a predetermined part. The extraction unit 21 may extract the predetermined part from the data related to the imaging signal by machine learning, for example. Note that the predetermined part extracted by the extraction unit 21 and the method of extracting the predetermined part by the extraction unit 21 are not limited to the above examples.

In the present embodiment, the orientation specifying unit 23 specifies a predetermined orientation of the mobile body M from the data related to the imaging signal. Therefore, as will be described later, when the orientation specifying unit 23 specifies the orientation of the mobile body M, imaging of the mobile body M is first performed by the imaging device 30 as will be described later. For example, the orientation specifying unit 23 specifies a predetermined orientation of the mobile body M from the shape of the mobile body M of the data related to the imaging signal. In this case, for example, as similar to the first embodiment, data indicating the relationship between the shape of the mobile body M and a predetermined orientation is stored in the memory 40, and the orientation specifying unit 23 compares the data of the relationship stored in the memory 40 with the point cloud data to specify the predetermined orientation of the mobile body M. In addition, the orientation specifying unit 23 may specify the moving direction of the mobile body M as the predetermined orientation of the mobile body M when the mobile body M moves from the data related to a plurality of frames of the imaging signal. As described above, the imaging device 30 can generally perform imaging with a higher number of pixels than the LiDAR device 10, and can image the mobile body M in detail. Therefore, by specifying the predetermined orientation of the mobile body M from the data related to the video signal, the predetermined orientation can be accurately specified.

Next, an operation of the monitoring system 1 in the present embodiment will be described.

First, a first operation in the present embodiment of the monitoring system 1 will be described. FIG. 6 is a flowchart illustrating the first operation of the control device 20 in the present embodiment. The first operation of the present embodiment is an operation in the case where the extraction unit 21 extracts the mobile body M from the point cloud data and extracts a predetermined direction of the mobile body M from the data related to the imaging signal. As illustrated in FIG. 6, the operation of the control device 20 of the present embodiment includes steps S31 to S38.

### <Steps S31 to S34>

Steps S31 to S34 are similar to steps S11 to S14 in the first operation.

### <Step S35>

This step is similar to step S17 of the first embodiment. In this step of the present embodiment, the predetermined orientation of the mobile body M is not specified. Therefore, in this step, as in step S17 of the first embodiment, the instruction unit 24 specifies a position where the position of the mobile body M specified in step S34 can be imaged, and specifies a direction from the specific direction side toward the mobile body M, that is, a direction opposite to the specific direction. The instruction unit 24 outputs the movement of the imaging device 30 and the change of the imaging direction together with the specified information as at least part of the instruction. Data related to the output instruction is transmitted to the imaging device 30 via the antenna 29.

The data related to the specified position and direction transmitted from the antenna 29 is input to the drive control unit 33 via the antenna 39 of the imaging device 30, and the imaging device 30 moves to a position separated from the mobile body M by a predetermined distance in a predetermined specific direction from the position of the mobile body M. Furthermore, the drive control unit 33 controls the imaging direction changing unit 32 on the basis of the data. Therefore, the imaging direction of the imaging device 30 is set to a direction facing the mobile body M. Thereafter, the imaging device 30 performs imaging according to an instruction from the control device 20 or an instruction from the imaging control unit 36. In this way, the imaging device 30 images the mobile body M from a specific direction of the mobile body M. The video signal captured by the imaging unit 34 is subjected to signal processing by the image processing unit 35 and output from the antenna 39. Then, the control device 20 receives the video signal from the antenna 29. In the present embodiment, data related to the video signal is input to the orientation specifying unit 23.

### <Step S36>

This step is an orientation specifying step of specifying a predetermined orientation of the mobile body M from the data related to the video signal from the imaging device 30. This step is different from step S15 of the first embodiment in that the orientation specifying unit 23 specifies a predetermined orientation of the mobile body M from the data related to the video signal. Therefore, as in step S15 of the first embodiment, the orientation specifying unit 23 specifies a predetermined orientation of the mobile body M from the shape of the mobile body M or specifies the moving direction of the mobile body M as a predetermined orientation of the mobile body M, for example. The predetermined orientation, having been specified, of the mobile body M is output to the instruction unit 24.

### <Step S37>

This step is a step of changing the next step depending on whether or not a predetermined orientation of the mobile body M has been specified in step S36. In this step, the control device 20 returns to step S31 when the predetermined orientation of the mobile body M has not been specified in step S36, and proceeds to step S38 when the predetermined orientation of the mobile body M has been specified in step S36. In the present operation of the present embodiment, after step S35, the mobile body M is imaged from a specific direction. When this imaging is continued, such imaging is continued.

### <Step S38>

This step is an instruction step of outputting an instruction to move to a position moved from the position of the mobile body M to a side of the predetermined orientation, and outputting an instruction to direct the imaging direction to the position of the mobile body M, to the imaging device 30, substantially similarly to step S18 of the first embodiment. However, this step is different from step S18 in that the predetermined orientation is specified from the data related to the video signal.

After this step, the imaging device 30 performs imaging according to an instruction from the control device 20 or an instruction from the imaging control unit 36. Thus, according to the present operation, the imaging device 30 can image the mobile body M from a direction of a predetermined orientation of the mobile body M or a specific direction. When the predetermined orientation is the moving direction of the mobile body M, the imaging device 30 images the mobile body M from the moving direction side. The video signal captured by the imaging unit 34 is subjected to signal processing by the image processing unit 35 and output from the antenna 39. Then, the control device 20 receives the video signal from the antenna 29, and outputs the video signal to the monitor 60. Upon receiving the video signal, the monitor 60 displays the video.

Next, a second operation of the present embodiment will be described.

FIG. 7 is a flowchart illustrating the second operation of the control device 20 in the present embodiment. The second operation of the present embodiment is an operation in the case where the extraction unit 21 extracts the mobile body M from the point cloud data and extracts a predetermined part of the mobile body M from the data related to the imaging signal. As illustrated in FIG. 7, the operation of the control device 20 in the present embodiment includes steps S41 to S49.

### <Steps S41 to S44>

Steps S41 to S44 are similar to steps S11 to S14 in the first operation.

### <Step S45>

This step is similar to step S35 of the present embodiment, and is similar to step S17 of the first embodiment. However, in this step, data related to the video signal input from the imaging device 30 is input to the extraction unit 21.

### <Step S46>

This step is an extraction step of extracting a predetermined part of the mobile body M from the data related to the video signal from the imaging device 30. This step is different from step S24 of the second operation in the first embodiment in that the extraction unit 21 extracts a predetermined part of the mobile body M from the data related to the video signal. Therefore, for example, the extraction unit 21 extracts the predetermined part from the shape of the mobile body M extracted from the data related to the video signal. Alternatively, for example, the extraction unit 21 extracts a part with the largest motion of the mobile body M as a predetermined part from the data related to the video signal. Data related to the extracted predetermined part is input to the position specifying unit 22.

### <Step S47>

This step is similar to step S25 of the second operation in the first embodiment, and is a step of changing the next step depending on whether or not a predetermined part of the mobile body M has been extracted from the data related to the video signal. The control device 20 returns to step S41 when the predetermined part cannot be extracted from the data related to the video signal, and proceeds to step S48 when the predetermined part has been extracted. In the present operation of the present embodiment, after step S45, the mobile body M is imaged from a specific direction. When this imaging is continued, such imaging is continued.

### <Step S48>

This step is a step in which the position specifying unit 22 specifies the position of the predetermined part of the mobile body M. In this step, for example, the position of the predetermined part of the mobile body M is indicated in, for example, a coordinate system in substantially the same manner as step S27 of the second operation in the first embodiment. The data related to the specified position of the predetermined part of the mobile body M is output to the instruction unit 24.

### <Step S49>

This step is an instruction step of outputting, to the imaging device 30, an instruction to move to a position where the specified position of the predetermined part of the mobile body M can be imaged, as in step S28 of the second operation in the first embodiment. Therefore, in this step, as in step S28, the instruction unit 24 specifies a position where the position of the predetermined part of the mobile body M can be imaged, specifies a direction from such a position toward the predetermined part, and outputs, to the imaging device 30, an instruction to move to the position where the predetermined part can be imaged and direct the imaging direction to a direction toward the predetermined part. Data related to the output instruction is transmitted to the imaging device 30 via the antenna 29.

The data related to the specified position and direction transmitted from the antenna 29 is input to the drive control unit 33 via the antenna 39 of the imaging device 30, the imaging device 30 moves to a position where the treatment part of the mobile body M can be imaged, and the imaging direction of the imaging device 30 is set to a direction facing the predetermined part of the mobile body M. Thereafter, the imaging device 30 performs imaging according to an instruction from the control device 20 or an instruction from the imaging control unit 36, in the same manner as the first operation in the first embodiment. Thus, according to the present operation, the imaging device 30 can image the predetermined part of the mobile body M. The video signal captured by the imaging unit 34 is subjected to signal processing by the image processing unit 35 and output from the antenna 39. Then, the control device 20 receives the video signal from the antenna 29, and outputs the video signal to the monitor 60. Upon receiving the video signal, the monitor 60 displays the video.

### (Third Embodiment)

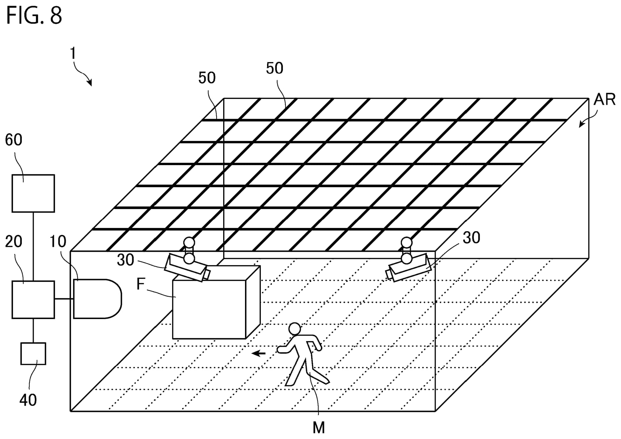

Next, a third embodiment of the present invention will be described in detail with reference to FIG. 8. Note that the same or equivalent components as those in the above embodiments are denoted by the same reference numerals and redundant description is omitted unless otherwise specified.

FIG. 8 is a conceptual diagram illustrating a monitoring system according to the third embodiment of the present invention. As illustrated in FIG. 8, the monitoring system of the present embodiment is different from the monitoring system 1 of the above embodiments in including a plurality of imaging devices 30 that image one mobile body M.

In the present embodiment, the control device 20 performs control so as to perform any of the first operation and the second operation in the first embodiment and the first operation and the second operation in the second embodiment on each of the imaging devices 30 that images the mobile body M. Therefore, the control device 20 has the same configuration as that of at least one of the first embodiment and the second embodiment.

Furthermore, in the present embodiment, the instruction unit 24 of the control device 20 instructs the respective imaging devices 30 to move to positions at which the position of the mobile body M can be imaged from different directions respectively, and to direct the imaging direction toward the mobile body M. Therefore, according to the present embodiment, a multi-angle video can be obtained.

As described above, the control device 20 of the present invention is the control device 20 to which point cloud data of the monitoring area AR output from the LiDAR device 10 is input and which controls the imaging device 30 that is movable in the monitoring area AR, and includes the extraction unit 21 that extracts the mobile body M from the point cloud data, the position specifying unit 22 that specifies the position of the extracted mobile body M, and the instruction unit 24 that outputs, to the imaging device 30, an instruction to move to a position where the position of the mobile body M can be imaged.

The program of the present invention is a program executed by the control device 20 that controls the imaging device 30 that is movable in the monitoring area AR on the basis of point cloud data of the monitoring area AR output from the LiDAR device 10, and includes an extraction step of extracting the mobile body M from the point cloud data, a position specifying step of specifying the position of the extracted mobile body M, and an instruction step of outputting, to the imaging device 30, an instruction to move to a position where the position of the mobile body M can be imaged.

The monitoring system 1 of the present invention includes the LiDAR device 10, the imaging device 30 that is movable in the monitoring area AR of the LiDAR device 10, and the control device 20 that controls the imaging device 30 on the basis of point cloud data of the monitoring area AR output from the LiDAR device 10. The control device 20 includes the extraction unit 21 that extracts the mobile body M from the point cloud data, the position specifying unit 22 that specifies the position of the extracted mobile body M, and the instruction unit 24 that outputs, to the imaging device 30, an instruction to move to a position where the position of the mobile body M can be imaged.

As described above, in the present invention, the control device 20 moves the imaging device 30 to a position where the position of the mobile body M can be imaged on the basis of the point cloud data from the LiDAR device 10. Therefore, even when the fixed object F other than the mobile body M that is the imaging target exists in the monitoring area AR, the imaging device 30 can image the mobile body M while avoiding the fixed object F.

Although the present invention has been described by taking the above-described embodiments as examples, the present invention is not limited thereto.

For example, in the above embodiment, an example having one mobile body M has been described, but a plurality of mobile bodies M are also acceptable, and the imaging device 30 may be individually assigned to each mobile body M. In this case, the control device 20 controls any one of the first operation and the second operation in the first embodiment and the second embodiment with respect to the imaging device 30 that images each mobile body M.

In the first operation of the first embodiment, it is not essential to specify a predetermined orientation of the mobile body M. In this case, the control device 20 may not include the orientation specifying unit 23, and may proceed to step S17 after step S14 in FIG. 4 and may not perform steps S15, S16, and S18.

Further, in the second operation of the first embodiment, it is not essential to specify a predetermined part of the mobile body M. In this case, the extraction unit 21 of the control device 20 may not extract a predetermined part, and may proceed to step S26 subsequent to step S23 in FIG. 5 and may not perform steps S24, S25, S27, and S28. However, if the orientation of the mobile body M is not specified in step S26, step S26 may include step S14 and step S17.

Furthermore, in the above embodiment, an example in which only one LiDAR device 10 is connected to the control device 20 has been described, but a plurality of LiDAR devices 10 may be connected to the control device 20.

In the above embodiment, it is assumed that the imaging device 30 moves along the rail 50, but the imaging device 30 may be different from that of the above embodiments as long as it can move in the monitoring area AR. For example, the imaging device 30 may be configured to move on the floor of the monitoring area AR by self-propelling.

Further, in the above embodiment, the imaging device 30 is configured such that the imaging direction can be changed by the imaging direction changing unit 32. However, the imaging direction of the imaging device 30 may be fixed. However, in this case, in the first operation of the first embodiment, the process proceeds to step S17 after step S14, and in the first operation of the second embodiment, steps S36 to S38 are not performed, and the mobile body M is imaged from a certain direction. In addition, also in the second operation of the first embodiment and the second embodiment, a specific part is always imaged from a certain direction.

Furthermore, in the above embodiment, the control device 20 and the imaging device 30 are connected wirelessly. However, the control device 20 and the imaging device 30 may be connected by a wire such as a signal line.

As described above, according to the present invention, a control device, a program, and a monitoring system, capable of realizing a monitoring system capable of imaging a mobile body that is an imaging target even when an object other than the mobile body exists in a monitoring area, are provided, and the control device, the program, and the monitoring system can be used in the field of monitoring and the like.

## Claims

1. A control device to which point cloud data of a monitoring area output from a LiDAR device is input, the control device controlling an imaging device that is movable in the monitoring area, the control device comprising:
an extraction unit that extracts a mobile body from the point cloud data;
a position specifying unit that specifies a position of the mobile body extracted; and
an instruction unit that outputs, to the imaging device, an instruction to move to a position at which the position of the mobile body is able to be imaged.

2. The control device according to claim 1, further comprising
an orientation specifying unit that specifies a predetermined orientation of the mobile body extracted, wherein
the instruction unit outputs, to the imaging device that is movable in the monitoring area and is capable of changing an imaging direction, an instruction to move to a position moved from the position of the mobile body to a side of the predetermined orientation, and outputs, to the imaging device, an instruction to direct the imaging direction to the position of the mobile body.

3. The control device according to claim 2, wherein
the orientation specifying unit specifies the predetermined orientation from the point cloud data.

4. The control device according to claim 3, wherein
the orientation specifying unit sets a moving direction of the mobile body to be the predetermined orientation.

5. The control device according to claim 2, wherein
data related to a video signal from the imaging device is input to the orientation specifying unit, and
the orientation specifying unit specifies the predetermined orientation from the data related to the video signal.

6. The control device according to claim 1, wherein
the extraction unit extracts a predetermined part of the mobile body,
the position specifying unit specifies a position of the predetermined part, and
the instruction unit outputs, to the imaging device, an instruction to move to a position at which the position of the predetermined part is able to be imaged.

7. The control device according to claim 6, wherein
the extraction unit extracts the predetermined part from the point cloud data.

8. The control device according to claim 7, wherein
the extraction unit sets a part having a largest motion of the mobile body as the predetermined part.

9. The control device according to claim 6, wherein
data related to a video signal from the imaging device is input to the extraction unit, and
the extraction unit extracts the predetermined part from the data related to the video signal.

10. The control device according to claim 1, wherein
the instruction unit outputs, to a plurality of the imaging devices, an instruction to move to positions at which the specified position of the mobile body is able to be imaged from different directions respectively.

11. A program executed by a control device that controls an imaging device that is movable in a monitoring area on a basis of point cloud data of the monitoring area output from a LiDAR device, the program comprising:
an extraction step of extracting a mobile body from the point cloud data;
a position specifying step of specifying a position of the mobile body extracted; and
an instruction step of outputting, to the imaging device, an instruction to move to a position at which the position of the mobile body is able to be imaged.

12. A monitoring system comprising:
a LiDAR device;
an imaging device that is movable in a monitoring area of the LiDAR device; and
a control device that controls the imaging device on a basis of point cloud data of the monitoring area output from the LiDAR device, wherein
the control device includes:
an extraction unit that extracts a mobile body from the point cloud data;
a position specifying unit that specifies a position of the mobile body extracted; and
an instruction unit that outputs, to the imaging device, an instruction to move to a position at which the position of the mobile body is able to be imaged.
